(19) Europäisches Patentamt
European Patent Office
Office européen des brevets

(11) **EP 4 703 540 A1**

(12) **EUROPEAN PATENT APPLICATION**

(43) Date of publication:
**04.03.2026 Bulletin 2026/10**

(21) Application number: **24382948.8**

(22) Date of filing: **03.09.2024**

(51) International Patent Classification (IPC):
**E05B 47/00** (2006.01)   **H01F 7/18** (2006.01)

(52) Cooperative Patent Classification (CPC):
**E05B 47/0002;** E05B 47/0046; E05B 2047/0058;
E05B 2047/0072; H01F 2007/1866

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Akiles Technologies S.L.**
**08014 Barcelona (ES)**

(72) Inventor: **Alfaro Galdón, Salvador**
**Barcelona (ES)**

(74) Representative: **Pons IP**
**Glorieta Rubén Darío 4**
**28010 Madrid (ES)**

Remarks:
Amended claims in accordance with Rule 137(2) EPC.

(54) **ELECTRIC DOOR LOCK DRIVER BASED ON A CURRENT PULSE GENERATOR AND A SWITCHED MODE CURRENT SOURCE WITH LOAD-DEPENDENT OUTPUT**

(57) The present invention relates to a system and method to control an electric door lock based on a current pulse generator and a switched mode current source with load-dependent output which allows to reduce the size of the installation and the energy needed for the opening/-closing of the door and offers the possibility of implementing a rechargeable battery as back up. To do so, the system and method generates 2 sequential current signals after receiving a trigger, wherein one of the signals is a current peak signal with short time duration and the other one a lower but longer in time current signal.

FIG3

EP 4 703 540 A1

**Description**

**OBJECT OF THE INVENTION**

The object of the invention relates to a system and method to control an electric door lock based on a current pulse generator and a switched mode current source with load-dependent output which allows to reduce the size of the installation and the energy needed for the opening/closing of the door, and offers the possibility of implementing a rechargeable battery as back up.

**BACKGROUND OF THE INVENTION**

Electric door openers internally incorporate a coil or solenoid, so that when voltage/current is applied to it, an electromagnetic field is generated by the electric current passing through it. In other words, the coil with the right core becomes an electromagnet.

This electromagnetic field makes possible the movement of an internal cam, which is attracted or repelled by this field, thus allowing the transformation of electrical energy into mechanical energy. This movement releases an internal latch or flange, allowing the door to be opened.

Typical uses of solenoids, acting as electromagnets, can be, for example, in starter motors commonly used in the automotive field; in solenoid valves, in the field of fluid control; or in electric locks used for access control.

In the case of electric door openers for use in access control, a key parameter is the ohmic resistance of the coil. We can find door openers with resistances from 1 Ohm to those exceeding 100 Ohms. Manufacturers usually provide in the device's data sheet the resistance of the coil or, failing that, the current consumption at a given voltage.

Traditionally, in the access control industry, electric door openers are excited by voltage sources (constant voltage). Typically, manufacturers may recommend the use of alternating current (hearing a classic hum during excitation, using e.g. 12 and/or 24 Vac) or direct current (e.g. 12 and/or 24 Vdc). Door opener manufacturers usually recommend the use of AC sources (transformer from 230 Vac to 12/24 Vac for example) for door openers with small value coil resistance and DC sources for door openers with medium or large coil resistance values (lower consumption and lower holding force). It should be noted that the higher the voltage of the source used, the higher the current used and the higher the voltage drop in the connection wiring.

If alternating current is used, it must be considered that to calculate the total impedance of the coil ($Z_L$), the resistance ($R_{dc}$) of the coil must be taken into account, and also the inductive reactance ($X_L = 2 * \pi * f * L$, where f is the frequency of the signal and L is the inductance of the coil). To calculate the modulus and impedance, the following ratio must be used: $|Z_L|^2 = R_{dc}^2 + X_L^2$. It is for this reason that if the coil resistance is very low, if a constant amplitude source is used to excite the door opener, it is appropriate to use an alternating power supply (AC) for a better sizing of it. Using an improper voltage (current) without regard to the resistance of the door opener coil greatly shortens the life of the device.

Note that the lower the ohmic resistance of the coil, the greater the current will circulate at an applied voltage, generating a greater magnetic field, allowing latches to be moved with greater retention force. Door openers that offer higher retention force are most commonly used in high-security installations.

Door controller typically use relays or transistors as switching elements to apply the corresponding voltage to door opener terminals once access has been granted to the user.

To a much lesser extent, PWM techniques (pulse width modulation, more commonly used in the field of solenoid valves than in access control) or using chopping circuits (generating a 50/60 Hz square signal from direct current) are also used to control door openers. With this technique, energy consumption can be reduced compared to the constant voltage technique. The use of the aforementioned techniques by manufacturers in the access control sector is very residual (practically non-existent).

**DESCRIPTION OF THE INVENTION**

The object of the present invention relates to a system and method for controlling an electric lock coil of an electric door lock.

The system for controlling the electric door lock comprises a current pulse generator circuit and a constant current source.

The current pulse generator circuit is intended to be connected to a controller of the electric door lock, to the electric lock coil, and to a DC input voltage (Vcc). It is configured to generate a current pulse ($I_{peak}$) to the electric lock coil during a peak time ($T_{peak}$), when the controller sends a trigger signal.

The current pulse generator could comprise a first transistor $Q_3$ intended to be connected to the DC input voltage Vcc and to the electric lock coil and configured to transmit the DC input voltage Vcc to the electric lock coil when because of the trigger signal a voltage higher than its threshold voltage is received in the first transistor $Q_3$.

**EP 4 703 540 A1**

Moreover, the current pulse generator could also comprise: a voltage pulse module connected to the controller and configured to send a voltage pulse when the trigger signal is received from the controller; a second transistor, $Q_2$, connected to the voltage pulse module and to the ground; a fifth resistance $R_5$ connected to the second transistor $Q_2$ and the first transistor $Q_3$; and a first resistance $R_1$ comprising two terminals, one that is intended to be connected between the DC input voltage Vcc and the first transistor $Q_3$ and the other connected between the fifth resistance and the first transistor $Q_3$. The voltage pulse generated is intended to conduct the DC input voltage Vcc from the DC input voltage Vcc to the ground through the fifth resistance $R_5$ and the first resistance $R_1$ activating the first transistor $Q_3$ to transmit the DC input voltage Vcc to the electric lock coil.

Additional components of the current pulse generator could further comprise: a protection module comprising a fourth resistance intended to be placed between the DC input voltage Vcc and the first transistor $Q_3$; and a third transistor $Q_1$, comprising three terminals, a first terminal connected between the first resistance $R_1$ and the fifth resistance $R_5$, a second terminal intended to be connected between the DC input voltage Vcc and the fourth resistance $R_4$ and a third terminal connected between the fourth resistance R4 and the first transistor $Q_3$. This third transistor $Q_1$, when the input DC voltage Vcc is over its threshold, transmits the input DC voltage Vcc to the ground through the fifth resistance and the second transistor, deactivating the first transistor $Q_3$, which also deactivates the third transistor $Q_1$, activating again the first transistor $Q_3$.

The second transistor $Q_2$ could be a NPN bipolar transistor, the third transistor $Q_1$ could be a PNP bipolar transistor and the first transistor $Q_3$ could be a channel P MOSFET transistor. Alternatively, the second transistor $Q_2$ could be N channel MOSFET transistor and the first transistor $Q_3$ could be a PNP bipolar transistor.

Furthermore, the voltage pulse module could preferably comprise a capacitor, C1, and a second resistance $R_2$ connected in series to the controller and to the second transistor $Q_2$, and a third resistance with two terminals, one connected between the second resistance $R_2$ and the second transistor Q2 and the other connected to ground.

The constant current source is also intended to be connected to the controller, to the electric lock coil, and to the DC input voltage source (Vcc). It is configured to generate an output voltage ($V_{out}$) greater than a voltage drop in the electric lock coil. The constant current source is also configured to generate a constant current source ($I_{hold}$) transmitted to the electric lock coil, during a hold time ($T_{hold}$), when the controller sends a trigger signal and after the current pulse ($I_{peak}$). This constant current source comprises a DC switched mode power source circuit, a low impedance resistor, an amplifier and a rectifier.

The DC switched mode power source circuit is intended to be connected to the DC input voltage (Vcc) and configured to receive the trigger signal and to the output voltage ($V_{out}$). The DC switched mode power source circuit can be one of the following: a DC/DC converter, a transistor, a load switch, or an integrated circuit.

The DC switched mode power source circuit could comprise: a first integrated circuit $U_1$, intended to be connected to the DC input voltage Vcc and to the controller and configured to provide an output voltage; a boost capacitor $C_3$ configured to increase the output voltage of the first integrated circuit $U_1$; and a stabilizing module comprising a first coil $L_1$ and a second diode and fourth capacitor connected in parallel to the first coil, being the second diode connected to ground, and configured to transform the received output voltage into a continuous and stabilized voltage.

The low impedance resistor ($R_{SENSE}$) is connected at the output of the DC switched mode power source circuit.

The amplifier's input is connected to the low impedance resistor ($R_{SENSE}$) and intended to be connected to an external DD voltage generator configured to provide a DD voltage ($V_{DD}$) and to a reference voltage generator configured to provide a reference voltage ($V_{REF}$), proportional to the constant current source ($I_{hold}$) and to a resistance of the electric lock coil. Its output is connected to the DC switched mode power source circuit to control the DC output voltage ($V_{out}$).

The reference voltage generator, which is configured to provide the voltage $V_{REF}$, could preferably comprise a voltage divider comprising a tenth resistance $R_{10}$, a thirteenth resistance $R_{13}$ and a capacitor connected in parallel to the thirteenth resistance $R_{13}$ and wherein the value of the tenth resistance $R_{10}$ and the thirteenth resistance $R_{13}$ is lower than the eleventh resistance $R_{11}$.

The amplifier, in turn, could comprise: a second integrated circuit $U_2$, comprising a third terminal, connected to the reference voltage generator by means of an eleventh resistor $R_{11}$, a fifth terminal intended to be connected to the voltage generator $V_{DD}$, a second terminal connected to ground, a first terminal connected to the first integrated circuit $U_1$ as a feedback path, and a fourth terminal connected to the feedback path by means of a twelfth resistor $R_{12}$; an eighth resistance $R_8$ comprising two terminals, one intended to be connected between the DC switched mode power source circuit and the low impedance resistor $R_{SENSE}$ and the other connected between the second integrated circuit $U_2$ and the eleventh resistor $R_{11}$; and a ninth resistance $R_9$ comprising two terminals, one connected between the first diode and the low impedance resistor $R_{SENSE}$ and the other connected between the second integrated circuit $U_2$ and the twelfth resistor $R_{12}$. These eight resistance $R_8$ and the ninth resistance $R_9$ are of the same value and the eleventh resistance $R_{11}$ and the twelfth resistance $R_{12}$ are of the same value, and a gain of the amplifier is equal to: $\dfrac{R_{12}}{R_9}$ .

The rectifier is connected to the output of the low impedance resistor ($R_{SENSE}$) and is configured to ensure that the constant current source ($I_{hold}$) is applied after the current pulse ($I_{peak}$), wherein the constant current source ($I_{hold}$) is proportional to a resistance value of the electric coil $R_{coil}$. This rectifier can be a diode.

Additionally, the system for controlling electric door lock of claim also contains a protection system comprising one or more circuits configured to provide protection against overvoltage and over-current, and to minimize electromagnetic compatibility problems. This protection system could comprise at least one of the following protective elements: a varistor, a conventional diode, a zener diode, a transil or a transient suppressor.

Preferably, this system is intended to be activated when the trigger signal emitted by the controller, which activates the current pulse generator circuit and the constant current source, is in the range of the DD voltage $V_{DD}$. The constant current source $I_{hold}$ generated is lower than the current pulse $I_{peak}$, being the peak time $T_{peak}$ in the range of milliseconds and the hold time $T_{hold}$ in the range of seconds.

The system of the invention also offers an alternative configuration where the wherein the DC input voltage generator VCC is a battery cell (8), which comprises a step-up boost converter configured to raise an output voltage from the battery cell; which allows the operation of the system in case of power failure.

The invention also related to a method for controlling the electric door lock, using the previously disclosed system comprises the steps:

a) receiving a trigger signal from the controller.

b) the trigger signal emitted by the controller activates the current pulse generator circuit and the constant current source when is in a range of $V_{DD}$.

c) when the current pulse generator is activated, it generates a voltage pulse and conducts it from the DC input voltage Vcc to the ground through the fifth resistance $R_5$ and the first resistance $R_1$ activating the first transistor $Q_3$ to transmit the DC input voltage Vcc to the electric lock coil; when the DC input voltage Vcc is over its threshold, transmits the DC input voltage Vcc to the ground through the fifth resistance and the second transistor, deactivating the first transistor $Q_3$, which also deactivates the third transistor $Q_1$, activating again the first transistor $Q_3$, this way the voltage transmitted to the electric lock coil is just a pulse, which results in the current pulse $I_{peak}$ with value $I_{peak} = V_{EB(Q1)}/R_4$, being $V_{EB(QL)}$ the base-emitter voltage of $Q_1$; wherein its duration is defined by the peak time $T_{peak}$ which is in the range of milliseconds.

d) this current pulse $I_{peak}$ is transmitted to the electric lock coil.

e) when the constant current source is activated, the DC switched mode power source transform the DC input voltage Vcc into the continuous stabilized output voltage $V_{out}$.

f) That output voltage is used as input for the amplifier, as well as reference voltage $V_{REF}$, to generate an output voltage which controls control the DC output voltage ($V_{out}$).

g) The output voltage $V_{out}$ goes through the low impedance resistor $R_{SENSE}$, generating the constant current source $I_{hold}$ which is proportional to the resistance value of the electric coil and its value is defined by $I_{hold} = I_{COIL} = V_{FB} / (R_{SENSE} * GAIN + \alpha * R_{COIL})$ where $V_{FB}$, $R_{SENSE}$, GAIN is, and $\alpha$ are constant values, so the current of the electric coil current $I_{COIL}$ depends on the resistance value of the electric coil $R_{coil}$.

h) The rectifier ensures that the constant current source ($I_{hold}$) is applied and transmitted to the electric lock coil only after the current pulse ($I_{peak}$), thus controlling the electric door lock for time $T_{peak} + T_{hold}$.

**DESCRIPTION OF THE DRAWINGS**

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

Figure 1 shows an example plot of the current waveform to be generated by the system and method of the invention with the circuit load being purely resistive.

Figure 2 shows a diagram with the main blocks of components and interactions of the system and method.

Figure 3 shows a detailed electronic scheme of one of the preferred embodiments.

Figure 4 shows a diagram of a preferred embodiment which allows the implementation of a rechargeable battery into the invention.

**PREFERRED EMBODIMENT OF THE INVENTION**

A preferred embodiment of the system and method for controlling an electric door lock is based on using a current pulse generator and a switched mode current source with load-dependent output.

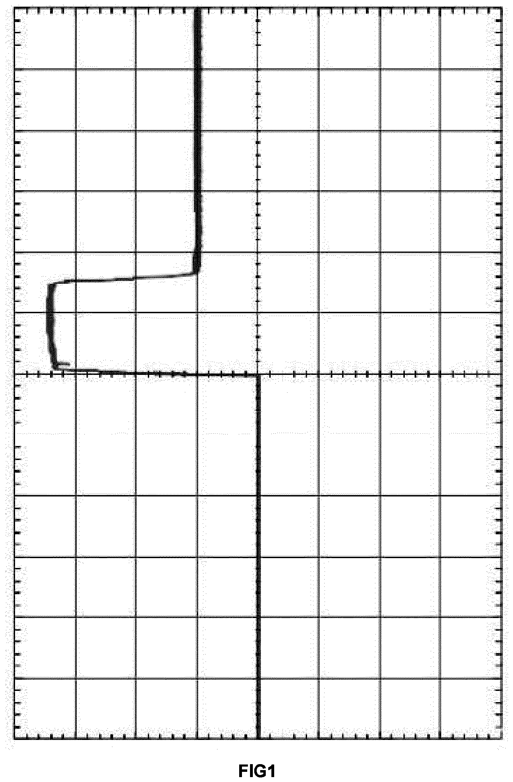

System and method of the invention comprises a controller that generates a current waveform as shown in Figure 1. The system comprises a controller circuit intended to be integrated into an access control device. The door opening permission could be generated by the following methods (among others): push button, code number, NFC/RFID card, smartphone application, biometric characteristics, etc.

The aim of the invention is to generate a current pulse of $I_{peak}$ value (peak current) for a small time (on the order of milliseconds, which we will call peak time $T_{peak}$) and then a pedestal of constant current source of $I_{hold}$ value (maintenance current) for a time that we will call hold time $T_{hold}$ (typically several seconds). Keep in mind that the excitation time of the electric door lock or opening time will be the sum of $T_{peak} + T_{hold}$.

The initial current peak ($I_{peak}$) will be sufficient to generate a magnetic field with an adequate intensity to be able to momentarily activate the electric door lock. To keep this electric door lock in the open position, not so much energy is necessary and therefore with a fraction of the peak current it is possible to keep the door opened in an unlocked state (door open). This is the purpose of the constant current source ($I_{hold}$).

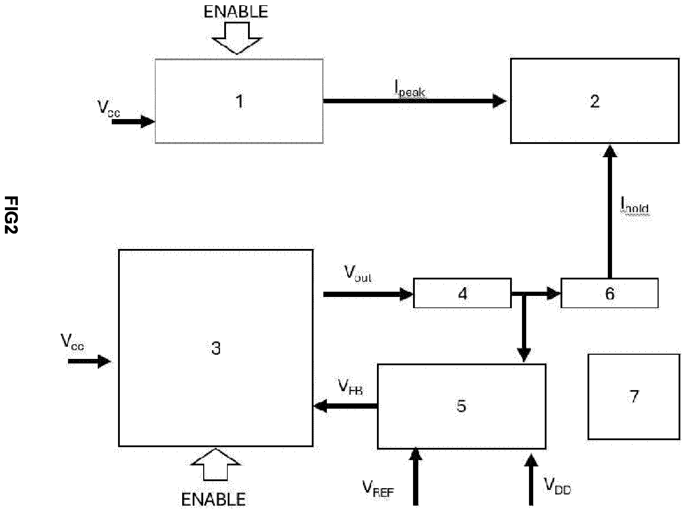

According to Figure 2, the system invention comprises a current pulse generator (1), limited to the maximum current peak $I_{peak}$ value. A current pulse is generated that has the ENABLE signal as the trigger signal, which can be generated by a microprocessor/microcontroller. This pulse of current is applied to the electric door coil.

A DC/DC converter (switched) (3) is used as the constant current source $I_{hold}$. This DC/DC converter has a voltage at the input that we will call DC input voltage Vcc, with an adequate value to cover the desired range of coil resistances: from short circuit (0 Ohm) to a coil resistance value that we will call maximum $R_{COIL}$. The higher the coil resistance, the greater the voltage drop in the coil. For circuit operation, the DC input voltage Vcc is required to be greater than the voltage drop in the coil for the entire permissible range of coil impedances. The ENABLE signal allows the converter to be activated for the desired time of activation of the door opener.

A small ohmic resistor (low impedance resistor $R_{SENSE}$ in the diagram) (4) is connected to the output of the DC/DC converter that serves to generate a voltage in its terminals proportional to the current circulating through the door opener coil. This resistor is connected to the input of a current-sensing amplifier (5) (with V/V GAIN). This amplifier is powered with an external DD voltage $V_{DD}$. A reference voltage ($V_{REF}$) is also used, which we will make proportional to the voltage drop in the door opener coil and therefore to the current that passes through its coil. The reference voltage $V_{REF}$ signal is important as it allows modulating the response of the circuit for different types of coil resistance values of the door openers on the market.

The circuit has a rectifier element (6) (it can be, among other possible components, a simple diode) that allows the desired form of current to be generated, so that once the initial current pulse ends, the hold current ($I_{hold}$) can circulate through the coil until the ENABLE signal expires.

The circuit has some protections (7) for overvoltage and over-current, among others and elements to minimize any problem related to electromagnetic compatibility (EMI/EMC).

The equation that governs the behavior of the holding current which circulates through the door opener coil is as follows:

$$V_{OUT} = V_{FB} = I_{COIL} * R_{SENSE} * GAIN + V_{REF}$$
$$= I_{COIL} * R_{SENSE} * GAIN + \alpha * I_{COIL} * R_{COIL}$$
$$= I_{COIL} * (R_{SENSE} * GAIN + \alpha * R_{COIL})$$

Clearing for $I_{COIL}$ (current per coil):

$$I_{COIL} = V_{FB} / (R_{SENSE} * GAIN + \alpha * R_{COIL})$$

$$V_{REF} = \alpha * I_{COIL} * R_{COIL}$$

where $\alpha$ is a constant and $V_{FB}$ is a parameter of the DC/DC converter (constant reference voltage)

With the appropriate low impedance resistor $R_{SENSE}$ values, the GAIN parameter of the current-sensing amplifier, the $V_{FB}$ parameter and the $\alpha$ constant, it is possible to obtain a constant current source with load-dependent output. In this way it is possible to parameterize this current source for a wide range of resistance values of the door opener coil, allowing the resulting system for controlling the electric door lock to be compatible with a large number of electric door openers available on the market.

A switching current source has great advantages over a linear regulator-based power source, firstly in terms of energy efficiency, with considerably less heat dissipation and secondly in terms of the wide range of input voltages (Vcc) it allows. That is why a DC/DC converter-based power source is used as the preferred implementation.

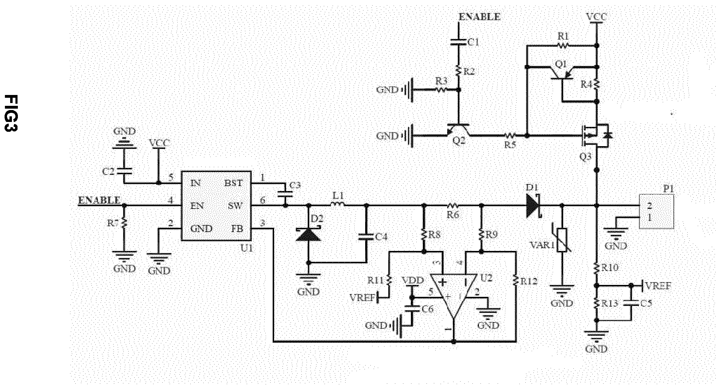

A detailed embodiment of the system, as shown in Figure 3, comprises a main electronic circuit which has two sub-circuits clearly differentiated by their function. One of them is the current pulse generator and is made up of the components $C_1$, $R_1$, $R_2$, $R_3$, $R_4$, $R_5$, $Q_1$, $Q_2$ and $Q_3$ wherein the R components are resistors, C are capacitors and Q are transistors. The other sub-circuit functions as a constant current source, being a switching current source in this case, with load-dependent output and incorporates the following components: $C_2$, $C_3$, $C_4$, $C_5$, $C_6$, $R_6$, $R_7$, $R_8$, $R_9$, $R_{10}$, $R_{11}$, $R_{12}$, $R_{13}$, $U_1$ and $U_2$ wherein U components are integrated circuits.

The $VAR_1$ varistor acts as EMI/EMC protection against overvoltage that occur at the initial moment after energizing the door opener coil. This protection could be any element suitable for this function, such as a conventional diode, Zener diode, transil or a transient suppressor (TVS). The rectifier $D_1$ (a Schottky diode is shown in the figure) is used to separate the 2 sub-circuits so that hold current $I_{hold}$ (holding current) takes place after the initial current pulse ($I_{peak}$) has ended.

The main electronic circuit is activated by a control trigger signal (ENABLE) generated by an output pin of a microprocessor/microcontroller. In this possible implementation, the trigger signal is active at high level (high level can correspond to external DD voltage $V_{DD}$ voltage). The electrified door will remain closed while the ENABLE signal is at low level (0 V). There are integrated analogues to first integrated circuit U1 but with an active enablement input at a low level (in the opposite way to the one presented here) and thus, when the ENABLE signal is low, the electrified door will remain opened and closed when it is at high level. Another implementation option, in the case of not having first integrated circuit $U_1$ of on/off input, would be to use a switching element (using, among other possibilities, a transistor or a load switch) to activate/deactivate this circuit.

The DC input voltage Vcc is the required for the operation of the circuit. The possible range of voltages suitable for the operation of this circuit is wide because a DC/DC switched converter is used. The DC input voltage Vcc can be drawn from the supply voltage of the access control device in which the controller is integrated. The DC input voltage Vcc signal is a direct current (DC) signal. If the access control device is powered by alternating current (AC), a pre-rectification stage (in half-wave or full-wave, for example) could be used.

Regarding the current pulse generation sub-circuit, at rest the ENABLE signal is at low level and neither $Q_1$, $Q_2$, nor $Q_3$ in conducting state. Once the edge, in this case the upside, of the ENABLE signal is present, the first capacitor $C_1$ and the resistors $R_2$ and $R_3$ form a voltage pulse, of short duration determined by the values of these components. As long as this voltage pulse is higher than the base-emitter voltage of the $Q_2$ transistor, the transistor $Q_2$ will conduct, momentarily connecting an $R_5$ terminal to ground. While $Q_2$ conducts, the resistive splitter formed by $R_1$ and $R_5$ polarizes the gate of the $Q_3$ transistor. As long as this voltage is higher than the threshold gate voltage, $Q_3$ will conduct. When driving $Q_3$ will allow DC input voltage Vcc to pass through to the door opener coil (the rest of the circuit is isolated thanks to $D_1$). The current passing through the coil will be limited thanks to the $Q_1$ and $R_4$ set. If the current flowing through $R_4$ reaches the value of the emitter-base drop of $Q_1$, the transistor $Q_1$ will conduct causing $Q_3$ to stop conducting. When $Q_3$ stops driving, $Q_1$ will stop driving as well, causing $Q_3$ to start driving. This sequence, repeated over time, causes the intended current limiting effect.

The peak current ($I_{peak}$) injected into the door opener coil is determined by the ratio between the emitter-base voltage of $Q_1$ and the resistance $R_4$, according to $I_{peak} = V_{EB(Q1)} /R_4$. The $R_4$ resistor can be a single resistor or employ several resistors in parallel to improve the power parameter supported by the resulting $R_4$ resistor. This peak current is high enough so that in the case of connecting door openers with an electric lock coil with low-resistance, the current pulse generated momentarily allows the release of the electric door lock. Note also that if the electric lock coil resistance is relatively large or of a certain value, the limiter will not act, and the peak current will be $I_{peak} = V_{CC}/R_{COIL}$. This current value is the same that we would have by exciting the electric door lock by means of a constant voltage, with the difference that in this case we would also have an energy saving, since once the pulse is finished, an $I_{hold}$ current is injected, this $I_{hold}$ current being significantly lower than $I_{peak}$ in any case.

In a possible implementation of the controller, an NPN bipolar transistor has been chosen for $Q_2$, a PNP bipolar transistor for $Q_1$ and a P-channel MOSFET transistor for Q3. With this configuration of the current pulse generator (upper part of the supply voltage rail) it would be possible to use, among other possibilities, $Q_2$ as an N-channel MOSFET and/or $Q_3$ as a PNP type bipolar transistor.

It would be possible to employ an alternative implementation by means of an analog current pulse generator circuit and but at the bottom of the power rail, switching the ground (GND) of the connector where the electric door opener is connected. This circuit would have an N-channel MOSFET Q3 and in the Q1 limiter circuit it would be NPN instead of PNP. The Q3 gate would also be governed by an NPN transistor. This alternate configuration would generate the same current waveform, thereby exciting the door opener in the same way

After the initial current pulse, it is necessary to maintain the open-door conditions. A high current is not necessary for this. It is at this point (the current pulse ends) that a holding current ($I_{hold}$) generated by the second sub-circuit of the controller is applied.

In a preferred embodiment, the first integrated circuit $U_1$ integrated circuit is a switched DC/DC converter (step-down). In this implementation, a chip with 6 pins has been considered, but there are integrated circuits with this function on the market with a different number of pins and with different nomenclatures of the same, including DC/DC converters that internally integrate the boost capacitor ($C_3$), the $D_2$ diode or even the coil ($L_1$) into their package.

In this implementation of the figure 1, $U_1$ has a power input with DC input voltage Vcc (pin IN) to which a decoupling capacitor ($C_2$) is included. It also has a pin called EN ($U_1$ On/Off Control). If the ENABLE signal is at a low level, first integrated circuit $U_1$ will be disabled. If, on the other hand, it is at a high level, $U_1$ will be active. In this implementation, $C_3$ is required, which runs from the $U_1$ BST pin to the SW pin (this capacitor is needed to command the first integrated circuit $U_1$ internal power switch gate above the supply voltage). The SW pin is the switched output of first integrated circuit $U_1$. To obtain a stabilized and continuous voltage, the $D_2$ diode, the $L_1$ coil and the $C_4$ capacitor are used (depending on the implementation it is possible that $C_4$ is a single capacitor or several in parallel, in order to limit the ripple of the signal at this point).

The resistance $R_6$ has small ohmic value in the m$\Omega$ range. $R_6$ acts as a shunt, having a voltage drop in its terminals proportional to the current circulating through the electric lock coil. This voltage in $R_6$ serves as an input to the current-sensing amplifier formed by $U_2$ and the resistors $R_8$, $R_9$, $R_{11}$ and $R_{12}$. $R_8$ and $R_9$ are of the same value. $R_{11}$ and $R_{12}$ are also of the same value. The gain of the amplifier is determined by the ratio between $R_9$ and $R_{12}$ according to: GAIN = $R_{12}/R_9$.

For the implementation of the current detector, 2 different possibilities are described: a discrete implementation using an op-amp and 4 resistors; or an integrated implementation using an integrated circuit including the operational circuit and resistors $R_8$, $R_9$, $R_{11}$ and $R_{12}$.

The second integrated circuit $U_2$, which is an op-amp in this implementation, is intended to be powered by a DD input voltage $V_{DD}$ generated internally in the circuit (among other possibilities by a DC/DC converter or a linear regulator). $C_6$ acts as a decoupling capacitor for the integrated $U_2$. The $U_2$ output connects directly to the of first integrated circuit $U_1$ FB (feedback) pin. The voltage on the FB $V_{FB}$ pin is forced by an internal voltage reference of first integrated circuit $U_1$. This $V_{FB}$ voltage will depend on the integrated chosen for the implementation. As mentioned above, the equation that governs the generation of the current that passes through the door opener coil is:

$$I_{COIL} = V_{FB} / (R_{SENSE} * GAIN + \alpha * R_{COIL})$$

where $R_{SENSE} = R_6$ and

$$\alpha = 1/[1 + (R_{10}/R_{13})]$$

From this equation the short-circuit immunity of this electrified lock controller can be deduced. Specifically, if $R_{COIL} = 0$, as would be in a short-circuit situation, then we have to $I_{COIL} = V_{FB}/ (R_{SENSE} * GAIN)$ which is the maximum value that the circuit will provide with any type of load and in any circumstance, this value being much lower than the short-circuit current that would be provided by a power supply with Vcc output in the event of a free short circuit in its terminals.

The reference voltage $V_{REF}$ is generated from the voltage divider formed by $R_{10}$ and $R_{13}$. The $C_5$ capacitor serves to smooth out this voltage. The aforementioned divider formed by $R_{10}$ and $R_{13}$ is parallel to the door opener coil, which means that the values of $R_{10}$ and $R_{13}$ are small compared to the value of $R_{11}$, therefore:

$$V_{REF} = V_{COIL} * [R_{13}/ (R_{10} + R_{13})] = I_{COIL} * R_{COIL} * [1 / (1 + R_{10}/R_{13})]$$
$$= \alpha * I_{COIL} * R_{COIL}$$

Generating a reference voltage ($V_{REF}$) proportional to the current circulating through the door opener coil serves to modulate the response of the current source, obtaining a distribution of generated currents more suitable to make the controller work correctly for a wider number of electric door openers available on the market and with a greater allowable range of electric lock coil impedance values.

As mentioned above, by properly selecting the $R_{SENSE}$, GAIN, $V_{FB}$ parameters and the $\alpha$ constant ($R_{10}$ and $R_{13}$ values), it is possible to optimize the response of the current source for a wide range of commercial electric door locks. For greater energy efficiency, selecting the first integrated circuit $U_1$ is crucial. So, it is advisable to use integrated circuit $U_1$ with an efficiency greater than 90%.

The circuit described above is easily industrialized, using electronic components existing on the market and of high availability, and can be incorporated into any access control device whose function is to control a door with an electrified lock.

One of the most interesting use cases of this technology, and one that is not currently offered by any manufacturer of access control devices to manage electric door openers, is that as it is a circuit that consumes very little energy for the opening of an electrified access, it is totally feasible to incorporate a small backup battery internally in the device, such as single 3.7V Li-ion / Li-Po cell for example, to offer full functionality in the event of power outages, including the opening of an electric door lock. The voltage of this single rechargeable cell can be converted into the DC input voltage Vcc mentioned in the diagram above, by means of a step-up boost converter, whose function is to raise the voltage offered by the battery until it reaches the desired level. Offering this functionality integrated into the product, in a miniaturized way, can be a great competitive advantage.

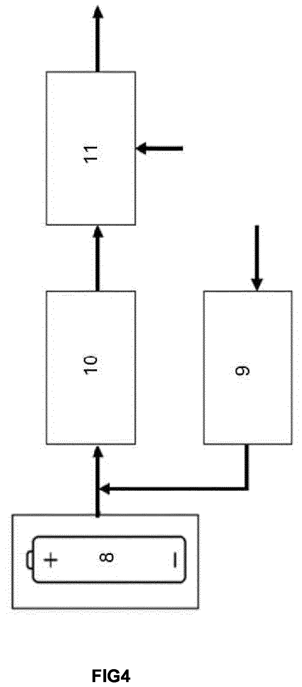

In figure 4, a diagram shows the concept of a rechargeable backup battery integrated into the controller of the present invention. This additional implementation comprises a rechargeable battery (8) connected to a battery changer (9). The battery is also connected to a step-up circuit (10) that is connected to a power multiplexer (11) whose output is $V_{cc}$. In normal operation, DC input voltage Vcc will be determined by the power supply that energizes the access controller. In the event of a power outage, the lifting circuit would act, providing a backup voltage for the correct operation of the controller (including the possibility of operating an electric door lock even with very low electric lock coil resistance). This single-cell battery backup concept would not be feasible in a conventional controller, with electric door lock excitation using constant voltage.

The use of the invention described in the previous section, instead of an excitation based on the application of a constant amplitude voltage (AC or DC) to terminal blocks of an electric door opener, has considerable advantages, which are listed below:

Firstly, to power the controller that is going to excite the door opener coil directly, it is possible to use power supplies with multiple voltages commonly used in the access control sector interchangeably. For example, among others: 12 Vdc, 12Vac, 24 Vdc, 24 Vac. This advantage is very interesting in the upgrade/modernization of a previously existing installation, taking advantage of the power supply and/or door opener already installed.

Secondly, this invention prevents heat build-up especially if the door opener coil is of low resistance, during prolonged activations or with a lot of recurrent use. With conventional type excitation (constant voltage), if the heat is not dissipated fast enough, coil failure can occur (typically the most common failure mode is the open circuit). In other words, by using the new technique presented in this document we increase the robustness, reliability and service life of an electrified access control installation.

It also allows to decrease the rating of the power supply of the controller + electric lock assembly. A lower amperage/power supply can be used, which reduces the size, weight, and cost of the power supply. The cost of a solution based on a relay-operated controller + oversized power supply, is higher than the solution based on this new type of controller + optimized power supply, especially if the door opener has a low-resistance coil.

Furthermore, as the current circulating through the door opener coil is lower (compared to the case of exciting the same at constant voltage), the voltage drops in the wiring that connects the door opener to the controller will be lower, allowing the use of cables of smaller section or alternatively to extend the possible distance between controller and door opener. This advantage will be more noticeable the lower the coil resistance and we intend to use a DC power supply.

Moreover, the system installation time is reduced, as with the new technology it is sufficient to connect the door opener to the 2 direct excitation terminals (without polarity). In the case of a relay-based controller, the installation is not straightforward and is sensitive to connection errors. The positive or negative of the source must be connected directly to the door opener and the other pole of the source must be passed through the relay common and the other terminal of the door opener must be connected to the normally open contact of the relay (in the case of non-inverted electric strikers).

In addition, use of the system and method invention enables direct excitation of an electric door opener with a low-resistance coil with minimal power consumption. For example, be a door opener (example of a real device on the market) with a coil resistor of 2.4 Ohms. If we use a constant voltage of 12 Vdc to drive the door opener, we would need a 60 W power supply only for the door opener (with a current capacity of 5 Amps). However, if we use a controller using the technique of applying a peak current and a holding current generated by a switching current source such as the one described above, using a DC/DC converter with an efficiency above 90%, it is possible to obtain a power demand during the opening of around 1 W. The energy improvement is considerable as can be seen compared to the technique commonly used in the access control sector globally.

This optimized energy consumption allows the application of persistent or prolonged openings, which are usually used in shops, offices, offices or professional consultations, during working hours or customer service. This type of application is not at all recommended in electrified locks excited by the conventional method (application of constant voltage), due to the high energy expenditure involved and the probability of generating breakdowns in the door opener caused by excessive heat generation in the coil.

This very low power concept fits perfectly with a battery-operated or battery-backed power gate controller in the event of power outages. With a small rechargeable battery (a single Li-Ion or Li-Po cell) and a step-up circuit, full operation of the controller (including openings of an electrified door) could be allowed. Currently, in facilities where the access control system is required to operate if there are power outages, during a certain period of time or number of operations, commercial UPSs (Uninterruptible Power Supply) are used, which are bulky, relatively expensive and complex to integrate into an access control installation. There is currently no electrified door controller with built-in battery backup (miniaturized and economical) on the market.

Finally, by design, the circuit presented here is immune to short-circuiting in the door opener connection terminals. If a short circuit is accidentally connected to the output of the controller or due to a breakdown, the coil of the door opener behaves like a frank short circuit, a maximum current will circulate that will be much lower than the short circuit current that would take place if the power supply were shorted directly, having to act the protections of the source itself if it had them. tearing down the access control installation and all the devices that hang from said power supply, even if they were not directly affected by said fault.

**Claims**

1. System for controlling an electric door lock comprising an electric lock coil, which comprises:

   - a current pulse generator circuit (1), intended to be connected to a controller (2), to the electric lock coil and to a DC input voltage (Vcc), and configured to generate a current pulse ($I_{peak}$) to the electric lock coil during a peak time ($T_{peak}$), when the controller sends a trigger signal;
   - a constant current source intended to be connected to the controller (2), to the electric lock coil and to the DC input voltage (Vcc), configured to generate an output voltage ($V_{out}$) greater than a voltage drop in the electric lock coil, being the constant current source configured to generate a constant current source ($I_{hold}$) to the electric lock coil, during a hold time ($T_{hold}$), when the controller sends a trigger signal and after the current pulse ($I_{peak}$), and comprising:

       - a DC switched mode power source circuit (3), intended to be connected to the DC input voltage (Vcc), and configured to receive the trigger signal and to output a DC output voltage ($V_{out}$);
       - a low impedance resistor ($R_{SENSE}$) (4) intended to be connected at the output of the DC switched mode power source circuit (3);
       - an amplifier (5), whose input is connected to the low impedance resistor ($R_{SENSE}$) (4); also intended to be connected to an external DD voltage generator configured to provide a DD voltage ($V_{DD}$) and to a reference voltage generator configured to provide a reference voltage ($V_{REF}$), proportional to the constant current source ($I_{hold}$) and to a resistance of the electric lock coil, and whose output is connected to the DC switched mode power source circuit (3) to control the DC output voltage ($V_{out}$);
       - a rectifier (6) which is connected to the output of the low impedance resistor ($R_{SENSE}$) (4) and is configured to ensure that the constant current source ($I_{hold}$) is applied after the current pulse **($I_{peak}$)**;

   and wherein the constant current source ($I_{hold}$) is proportional to a resistance value of the electric coil $R_{coil}$; and wherein the constant current source $I_{hold}$ is lower than the current pulse $I_{peak}$ and, wherein the peak time $T_{peak}$ is in the range of milliseconds and the hold time $T_{hold}$ is in the range of seconds.

2. The system for controlling electric door lock of claim 1, further comprising a protection system (7) comprising one or more circuits configured to provide protection against overvoltage and over-current, and to minimize electromagnetic compatibility problems; wherein the protection system comprises at least one of the following protective elements: varistor, conventional diode, zener diode, transil or a transient suppressor.

3. The system for controlling electric door lock of claim 1, wherein the rectifier (6) is a diode.

4. The system for controlling electric door lock of claim 1, wherein the DC switched mode power source circuit (3) is a DC/DC converter, a transistor, a load switch or an integrated circuit.

5. The system for controlling electric door lock of claim 1, wherein the trigger signal emitted by the controller (2) activates the current pulse generator circuit (1) and the constant current source when is in a range of $V_{DD}$.

6. The system for controlling electric door lock of claim 1, wherein the current pulse generator circuit (1) comprises a first transistor $Q_3$ intended to be connected to the DC input voltage Vcc and to the electric lock coil and configured to transmit the voltage Vcc to the electric lock coil when as a result of the trigger signal a voltage higher than its threshold voltage is received in the first transistor $Q_3$.

7. The system for controlling electric door lock of claim 6, wherein the current pulse generator circuit (1) further comprises:

   - a voltage pulse module connected to the controller (2) and configured to send a voltage pulse when the trigger signal is received from the controller; which comprises a capacitor, C1, and a second resistance R2 connected in series to the controller (2) and to the second transistor Q2, and a third resistance with two terminals, one connected between the second resistance R2 and the second transistor Q2 and the other connected to ground ;
- a second transistor, $Q_2$, connected to the voltage pulse module and to the ground;
- a fifth resistance $R_5$ connected to the second transistor $Q_2$ and the first transistor $Q_3$;
- a first resistance $R_1$ comprising two terminals, one intended to be connected between the DC input voltage Vcc and the first transistor $Q_3$ and the other connected between the fifth resistance and the first transistor $Q_3$;

and wherein the voltage pulse generated conducts the voltage Vcc from the DC input voltage Vcc to the ground through the fifth resistance $R_5$ and the first resistance $R_1$ activating the first transistor $Q_3$ to transmit the voltage Vcc to the electric lock coil.

8. The system for controlling electric door lock of claim 7, wherein the current pulse generator circuit (1) further comprises:

- a protection module comprising a fourth resistance intended to be placed between the DC input voltage Vcc and the first transistor $Q_3$; and
- a third transistor $Q_1$, comprising three terminals, a first terminal connected between the first resistance $R_1$ and the fifth resistance $R_5$, a second terminal intended to be connected between the DC input voltage Vcc and the fourth resistance $R_4$ and a third terminal connected between the fourth resistance $R_4$ and the first transistor $Q_3$;

wherein the third transistor $Q_1$, when the voltage Vcc is over its threshold, transmits the voltage Vcc to the ground through the fifth resistance and the second transistor, deactivating the first transistor $Q_3$, which also deactivates the third transistor $Q_1$, activating again the first transistor $Q_3$.

9. The system for controlling electric door lock of claim 1 wherein the DC switched mode power source circuit (3) comprises:

- a first integrated circuit $U_1$, intended to be connected to the DC input voltage Vcc and to the controller and configured to provide an output voltage;
- a boost capacitor $C_3$ configured to increase the output voltage of the first integrated circuit $U_1$;
- a stabilizing module comprising a first coil $L_1$, and a second diode and fourth capacitor connected in parallel to the first coil, being the second diode connected to ground, and configured to transform the received output voltage into a continuous and stabilized voltage.

10. The system for controlling electric door lock of claim 8, wherein the second transistor $Q_2$ is a NPN bipolar transistor, the third transistor $Q_1$ is a PNP bipolar transistor and the first transistor $Q_3$ is a channel P MOSFET transistor.

11. The system for controlling electric door lock of claim 8, wherein the second transistor $Q_2$ is N channel MOSFET transistor and the first transistor $Q_3$ is a PNP bipolar transistor.

12. The system for controlling electric door lock of claim 1 wherein the amplifier (5) comprises:

- a second integrated circuit $U_2$, comprising a third terminal, connected to the reference voltage generator by means of an eleventh resistor $R_{11}$, a fifth terminal intended to be connected to the voltage generator $V_{DD}$, a second terminal connected to ground, a first terminal connected to the first integrated circuit $U_1$ as a feedback path, and a fourth terminal connected to the feedback path by means of a twelfth resistor $R_{12}$;
- an eighth resistance $R_8$ comprising two terminals, one connected between the DC switched mode power source circuit (3) and the low impedance resistor $R_{SENSE}$ and the other connected between the second integrated circuit $U_2$ (4) and the eleventh resistor $R_{11}$;
- a ninth resistance $R_9$ comprising two terminals, one connected between the first diode and the low impedance resistor $R_{SENSE}$ (4) and the other connected between the second integrated circuit $U_2$ and the twelfth resistor $R_{12}$;

wherein the eight resistance $R_8$ and the ninth resistance $R_9$ are of the same value and the eleventh resistance $R_{11}$ and the twelfth resistance $R_{12}$ are of the same value, and a gain of the amplifier is equal to: $\dfrac{R_{12}}{R_9}$ .

13. The system for controlling electric door lock of claim 1 wherein the reference voltage generator, configured to provide the voltage $V_{REF}$, comprises a voltage divider comprising a tenth resistance $R_{10}$, a thirteenth resistance $R_{13}$ and a capacitor connected in parallel to the thirteenth resistance $R_{13}$ and wherein the value of the tenth resistance $R_{10}$ and the thirteenth resistance $R_{13}$ is lower than the eleventh resistance $R_{11}$.

14. The system for controlling electric door lock of claim 8 wherein the DC input voltage generator Vcc is a battery cell (8), which comprises a step-up boost converter configured to raise an output voltage from the battery cell; which allows the operation of the system in case of power failure.

15. A method for controlling an electric door lock, using the system disclosed in the previous claims, which comprises the steps:

- receiving a trigger signal from a controller (2);
- activating the current pulse generator circuit (1) and the constant current source when the trigger signal is received;
- generating a voltage pulse from the DC input voltage Vcc
- transmitting the voltage pulse Vcc to the ground through the fifth resistance and the second transistor, when the voltage Vcc is below the first transistor $Q_3$ threshold;
- activating the first transistor $Q_3$ to transmit the voltage pulse Vcc to the electric lock coil, when the voltage Vcc is over the first transistor $Q_3$ threshold;
- activating the third transistor $Q_1$, when the voltage Vcc is over the third transistor $Q_1$ threshold, transmitting the voltage Vcc to the ground through the fifth resistance and the second transistor and deactivating the first transistor $Q_3$;
- deactivating the third transistor $Q_1$ when the first transistor $Q_3$ is deactivated, thus, activating again the first transistor $Q_3$;
- transmitting $I_{peak}$ to the electric lock coil;
- transforming the input voltage Vcc into a continuous stabilized output voltage $V_{out}$ by means of the DC switched mode power source circuit (3) when the constant current source is activated;
- amplifying the output voltage by means of the amplifier (5), using a reference voltage $V_{REF}$ dependent on the resistance value of the electric lock coil, to generate an amplified output voltage to the DC switched mode power source circuit (5) ($V_{FB}$);
- generating a constant current source ($I_{hold}$) by means of a low impedance resistor $R_{SENSE}$ (4), which receives the output voltage ($V_{out}$) and;
- applying the constant current source ($I_{hold}$) to the electric lock coil after the current pulse ($I_{peak}$), by means of the rectifier, thus opening the electric door lock for time $T_{peak} + T_{hold}$.

**Amended claims in accordance with Rule 137(2) EPC.**

1. System for controlling an electric door lock comprising an electric lock coil, which comprises:

- a current pulse generator circuit (1), intended to be connected to a controller (2), to the electric lock coil and to a DC input voltage ($V_{CC}$), and configured to generate a current pulse ($I_{peak}$) to the electric lock coil during a peak time ($T_{peak}$), when the controller sends a trigger signal;
- a constant current source intended to be connected to the controller (2), to the electric lock coil and to the DC input voltage ($V_{CC}$), configured to generate an output voltage ($V_{out}$) greater than a voltage drop in the electric lock coil, being the constant current source configured to generate a constant current source ($I_{hold}$) to the electric lock coil, during a hold time ($T_{hold}$), when the controller sends a trigger signal and after the current pulse ($I_{peak}$), and comprising:

- a DC switched mode power source circuit (3), intended to be connected to the DC input voltage ($V_{CC}$), and configured to receive the trigger signal and to output a DC output voltage ($V_{out}$);
- a low impedance resistor ($R_{SENSE}$) (4) intended to be connected at the output of the DC switched mode power source circuit (3);
- an amplifier (5), whose inputs are connected to the low impedance resistor ($R_{SENSE}$) (4); to an external DD voltage generator configured to provide a DD voltage ($V_{DD}$); and to a reference voltage generator configured to provide a reference voltage ($V_{REF}$), proportional to the constant current source ($I_{hold}$) and to a resistance of the electric lock coil; and whose output is connected to the DC switched mode power source circuit (3) to control the DC output voltage ($V_{out}$);

- a rectifier (6) which is connected to the output of the low impedance resistor ($R_{SENSE}$) (4) and is configured to ensure that the constant current source ($I_{hold}$) is applied after the current pulse ($I_{peak}$);

and wherein the constant current source ($I_{hold}$) is related to a resistance value of the electric coil ($R_{coil}$) via the formula $I_{hold} = V_{FB} / (R_{SENSE} * GAIN + \alpha * R_{COIL})$, where $R_{SENSE}$ is the low impedance resistor value, GAIN is the gain parameter of the amplifier, $V_{FB}$ is a parameter of the DC switched mode power source circuit and $\alpha$ is a constant; and wherein the constant current source ($I_{hold}$) is lower than the current pulse ($I_{peak}$) and, wherein the peak time ($T_{peak}$) is in the range of milliseconds and the hold time ($T_{hold}$) is in the range of seconds.

2. The system for controlling electric door lock of claim 1, further comprising a protection system (7) comprising one or more circuits configured to provide protection against overvoltage and over-current, and to minimize electromagnetic compatibility problems; wherein the protection system comprises at least one of the following protective elements: varistor, conventional diode, zener diode, transil or a transient suppressor.

3. The system for controlling electric door lock of claim 1, wherein the rectifier (6) is a diode.

4. The system for controlling electric door lock of claim 1, wherein the DC switched mode power source circuit (3) is a DC/DC converter, a transistor, a load switch or an integrated circuit.

5. The system for controlling electric door lock of claim 1, wherein the trigger signal emitted by the controller (2) activates the current pulse generator circuit (1) and the constant current source when is in a range of DD voltage ($V_{DD}$).

6. The system for controlling electric door lock of claim 1, wherein the current pulse generator circuit (1) comprises a first transistor ($Q_3$) intended to be connected to the DC input voltage ($V_{CC}$) and to the electric lock coil and configured to transmit the voltage of the DC input voltage ($V_{CC}$) to the electric lock coil when as a result of the trigger signal a voltage higher than its threshold voltage is received in the first transistor ($Q_3$).

7. The system for controlling electric door lock of claim 6, wherein the current pulse generator circuit (1) further comprises:

   - a voltage pulse module connected to the controller (2) and configured to send a voltage pulse when the trigger signal is received from the controller; which comprises a capacitor (C1), and a second resistance (R2) connected in series to the controller (2) and to the second transistor (Q2), and a third resistance with two terminals, one connected between the second resistance (R2) and the second transistor (Q2) and the other connected to ground ;
   - a second transistor ($Q_2$) connected to the voltage pulse module and to the ground;
   - a fifth resistance ($R_5$) connected to the second transistor ($Q_2$) and the first transistor ($Q_3$);
   - a first resistance ($R_1$) comprising two terminals, one intended to be connected between the DC input voltage ($V_{CC}$) and the first transistor ($Q_3$) and the other connected between the fifth resistance ($R_5$) and the first transistor ($Q_3$);

   and wherein the voltage pulse generated conducts the voltage of the DC input voltage ($V_{CC}$) from said DC input voltage ($V_{CC}$) to the ground through the fifth resistance ($R_5$) and the first resistance ($R_1$) activating the first transistor ($Q_3$) to transmit the voltage of the DC input voltage ($V_{CC}$) to the electric lock coil.

8. The system for controlling electric door lock of claim 7, wherein the current pulse generator circuit (1) further comprises:

   - a protection module comprising a fourth resistance intended to be placed between the DC input voltage ($V_{CC}$) and the first transistor ($Q_3$); and
   - a third transistor ($Q_1$), comprising three terminals, a first terminal connected between the first resistance ($R_1$) and the fifth resistance ($R_5$), a second terminal intended to be connected between the DC input voltage ($V_{CC}$) and the fourth resistance ($R_4$) and a third terminal connected between the fourth resistance ($R_4$) and the first transistor ($Q_3$);

   wherein the third transistor ($Q_1$), when the voltage of the DC input voltage ($V_{CC}$) is over its threshold, transmits the voltage of the DC input voltage ($V_{CC}$) to the ground through the fifth resistance ($R_5$) and the second transistor ($Q_2$), deactivating the first transistor ($Q_3$), which also deactivates the third transistor ($Q_1$), activating again the first transistor

(Q$_3$).

9. The system for controlling electric door lock of claim 1 wherein the DC switched mode power source circuit (3) comprises:

- a first integrated circuit (U$_1$), intended to be connected to the DC input voltage (V$_{CC}$) and to the controller and configured to provide an output voltage;
- a boost capacitor (C$_3$) configured to increase the output voltage of the first integrated circuit (U$_1$);
- a stabilizing module comprising a first coil (L$_1$), and a second diode and fourth capacitor connected in parallel to the first coil (L$_1$), being the second diode connected to ground, and configured to transform the received output voltage into a continuous and stabilized voltage.

10. The system for controlling electric door lock of claim 8, wherein the second transistor (Q$_2$) is a NPN bipolar transistor, the third transistor (Q$_1$) is a PNP bipolar transistor, and the first transistor (Q$_3$) is a channel P MOSFET transistor.

11. The system for controlling electric door lock of claim 8, wherein the second transistor (Q$_2$) is N channel MOSFET transistor, and the first transistor (Q$_3$) is a PNP bipolar transistor.

12. The system for controlling electric door lock of claim 1 wherein the amplifier (5) comprises:

- a second integrated circuit (U$_2$), comprising a third terminal, connected to the reference voltage generator by means of an eleventh resistor (R$_{11}$), a fifth terminal intended to be connected to the voltage generator (V$_{DD}$), a second terminal connected to ground, a first terminal connected to the first integrated circuit (U$_1$) as a feedback path, and a fourth terminal connected to the feedback path by means of a twelfth resistor (R$_{12}$);
- an eighth resistance (R$_8$) comprising two terminals, one connected between the DC switched mode power source circuit (3) and the low impedance resistor (R$_{SENSE}$) (4) and the other connected between the second integrated circuit (U$_2$) and the eleventh resistor (R$_{11}$);
- a ninth resistance (R$_9$) comprising two terminals, one connected between the first diode and the low impedance resistor (R$_{SENSE}$) (4) and the other connected between the second integrated circuit (U$_2$) and the twelfth resistor (R$_{12}$);

wherein the eighth resistance (R$_8$) and the ninth resistance (R$_9$) are of the same value and the eleventh resistance (R$_{11}$) and the twelfth resistance (R$_{12}$) are of the same value, and a gain of the amplifier is equal to: $\dfrac{R_{12}}{R_9}$ .

13. The system for controlling electric door lock of claim 1 wherein the reference voltage generator, configured to provide the reference voltage (V$_{REF}$), comprises a voltage divider comprising a tenth resistance (R$_{10}$), a thirteenth resistance (R$_{13}$) and a capacitor connected in parallel to the thirteenth resistance (R$_{13}$) and wherein the value of the tenth resistance (R$_{10}$) and the thirteenth resistance (R$_{13}$) is lower than the eleventh resistance (R$_{11}$).

14. The system for controlling electric door lock of claim 8 wherein the DC input voltage (V$_{CC}$) generator is a battery cell (8), which comprises a step-up boost converter configured to raise an output voltage from the battery cell; which allows the operation of the system in case of power failure.

15. A method for controlling an electric door lock, using the system disclosed at least in claim 8, which comprises the steps:

- receiving a trigger signal from a controller (2);
- activating the current pulse generator circuit (1) and the constant current source when the trigger signal is received;
- generating a voltage pulse from the DC input voltage (V$_{CC}$);
- transmitting the voltage pulse of the DC input voltage (V$_{CC}$) to the ground through the fifth resistance and the second transistor, when the voltage of the DC input voltage (V$_{CC}$) is below the first transistor (Q$_3$) threshold;
- activating the first transistor (Q$_3$) to transmit the voltage pulse of the DC input voltage (V$_{CC}$) to the electric lock coil, when the voltage of the DC input voltage (V$_{CC}$) is over the first transistor (Q$_3$) threshold;
- activating the third transistor (Q$_1$), when the voltage of the DC input voltage (V$_{CC}$) is over the third transistor (Q$_1$) threshold, transmitting the voltage of the DC input voltage (V$_{CC}$) to the ground through the fifth resistance and the second transistor and deactivating the first transistor (Q$_3$);
- deactivating the third transistor (Q$_1$) when the first transistor (Q$_3$) is deactivated, thus, activating again the first

transistor ($Q_3$);
- transmitting the current pulse ($I_{peak}$) to the electric lock coil;
- transforming the voltage of the DC input voltage ($V_{CC}$) into a continuous stabilized output voltage ($V_{out}$) by means of the DC switched mode power source circuit (3) when the constant current source is activated;
- amplifying the output voltage by means of the amplifier (5), using a reference voltage ($V_{REF}$) dependent on the resistance value of the electric lock coil, to generate an amplified output voltage to the DC switched mode power source circuit (5) ($V_{FB}$);
- generating a constant current source ($I_{hold}$) by means of a low impedance resistor ($R_{SENSE}$) (4), which receives the output voltage ($V_{out}$) and;

applying the constant current source ($I_{hold}$) to the electric lock coil after the current pulse ($I_{peak}$), by means of the rectifier, thus opening the electric door lock for the peak time ($T_{peak}$) plus the hold time ($T_{hold}$).

**FIG1**

FIG2

FIG3

FIG4

**EUROPEAN SEARCH REPORT**

Application Number

EP 24 38 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 600 176 A (HANCHETT ENTRY SYSTEMS INC [US]) 27 April 2022 (2022-04-27) * the whole document * | 1-15 | INV. E05B47/00 H01F7/18 |
| A | US 4 771 218 A (MCGEE MICHAEL H [US]) 13 September 1988 (1988-09-13) * column 9 - column 10; figures 9-10 * | 1,15 | |
| A | DE 10 2008 014976 A1 (IST SYSTEMS GMBH [DE]) 13 November 2008 (2008-11-13) * the whole document * | 1,15 | |
| A | US 4 003 152 A (BARKER JAMES N ET AL) 18 January 1977 (1977-01-18) * figures 3,4,12 * | 1,15 | |

TECHNICAL FIELDS
SEARCHED (IPC)

E05B
H01F

The present search report has been drawn up for all claims

| Place of search | Date of completion of the search | Examiner |
|---|---|---|
| The Hague | 29 January 2025 | Ansel, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 2948

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | | Publication date | Patent family member(s) | | Publication date |
|---|---|---|---|---|---|
| GB 2600176 | A | 27-04-2022 | CA | 3135453 A1 | 23-04-2022 |
| | | | GB | 2600176 A | 27-04-2022 |
| US 4771218 | A | 13-09-1988 | NONE | | |
| DE 102008014976 A1 | | 13-11-2008 | NONE | | |
| US 4003152 | A | 18-01-1977 | NONE | | |

EPO FORM P0459